# EUROPÄISCHE PATENTSCHRIFT

(11) **EP 0 700 766 B1**
(45) Veröffentlichungstag und Bekanntmachung des Hinweises auf die Patenterteilung: **27.10.1999**
(21) Anmeldenummer: 95113327.1
(22) Anmeldetag: 24.08.1995
(51) Int. Cl.: B29C 45/26

(54) **Vorrichtung zur Herstellung von Spritzguss-Formteilen**
Apparatus for manufacturing injection moulded articles
Dispositif pour fabriquer des articles moulés par injection

(30) Priorität: 09.09.1994 DE 4432163
(43) Veröffentlichungstag der Anmeldung: 13.03.1996
(73) Patentinhaber: August Läpple GmbH & Co., D-74076 Heilbronn (DE)
(72) Erfinder: Pierro, Helmut, D-74254 Offenau (DE)
(74) Vertreter: Finsterwald, Manfred, Dipl.-Ing., Dipl.-Wirtsch.-Ing.

(56) Entgegenhaltungen:
- WO-A-84/03656
- WO-A-87/03242
- DE-A- 1 963 102
- DE-A- 2 941 121
- DE-C- 3 402 404
- US-A- 2 526 877
- US-A- 2 905 990

## Beschreibung

Die Erfindung betrifft eine Vorrichtung zum Herstellen von Spritzguß-Formteilen, insbesondere von großflächigen Kunststoff-Formteilen, mit einer Patritzeneinheit und einer Matritzeneinheit, die zwischen einer maschinenseitigen Aufspannfläche und einer Druck ausübenden Anordnung gegeneinander verspannbar sind und dabei zwischen sich einen dem Jeweiligen Formteil entsprechenden Hohlraum begrenzen, in den zumindest eine Hochdruckzuführung für das Spritzgußmaterial mündet.

Derartige, auch als Spritzgießwerkzeuge bezeichenbare Vorrichtungen sind bekannt und in der Praxis in vielfältiger Weise im Einsatz. Häufig handelt es sich dabei um Großwerkzeuge, wie sie beispielsweise zur Herstellung von Komponenten für Kraftfahrzeuge, zum Beispiel Stoßfänger, flächige Verkleidungselemente, Armaturenbretteinheiten und dergleichen verwendet werden.

Die bekannten Vorrichtungen dieser Art, die während der Spritzgießvorgänge aufgrund der dabei auftretenden Innendrücke, die bis zu 1000 bar erreichen können, sehr hohen statischen und dynamischen Belastungen ausgesetzt sind, werden aus vollgeschmiedetem Material ausgefräst.

Auf diese Weise können zwar funktionstüchtige Systeme erhalten werden, aber es müssen dabei viele Nachteile in Kauf genommen werden, die vor allem zu sehen sind in den hohen Herstellkosten, der überaus langen Zeitspanne, die für die Fertigung benötigt wird, dem hohen Gewicht der Systeme und der Tatsache, daß Zusatzfunktionen, die für die Handhabung und den Betrieb benötigt werden, durch zusätzliche separate Einheiten realisiert werden müssen, die dann mit dem jeweiligen Grundkörper zu verschrauben sind. Dies gilt beispielsweise hinsichtlich Transportelementen und Führungselementen. Zusätzliche aufwendige Bearbeitungsvorgänge sind erforderlich, um in den jeweiligen Grundkörper erforderliche Durchgänge und Fenster einzubringen.

Aus dem Dokument WO 84 03 656 A ist eine Vorrichtung zum Herstellen von Kunststoff-Formteilen bekannt. Diese Vorrichtung besitzt eine Patrizeneinheit und eine Matrizeneinheit, die zwischen einer maschinenseitigen Aufspannfläche und einer druckausübenden Anordnung gegeneinander verspannbar sind und dabei zwischen sich einen dem jeweiligen Formteil entsprechenden Hohlraum begrenzen, in den zumindest eine Hochdruckzuführung für Spritzgußmaterial mündet. Dabei besteht sowohl die Patrizeneinheit als auch die Matrizeneinheit jeweils aus einem konturgebenden Formeinsatz und einem den jeweiligen Formeinsatz formschüssig aufnehmenden Körper aus Gußmaterial.

Aufgabe der Erfindung ist es, eine Vorrichtung der eingangs angegebenen Art sowohl hinsichtlich der Fertigung als auch hinsichtlich der Funktion und der Handhabbarkeit sowie der statischen und dynamischen Belastbarkeit zu verbessern.

Gelöst wird diese Aufgabe nach der Erfindung dadurch, daß der den jeweiligen Formeinsatz aufnehmende Körper als den jeweiligen Formeinsatz abstützend umschließender Steggurtkörper ausgebildet ist und daß die gegossenen Steggurtkörper jeweils aus einem inneren Hüllenteil zur formschlüssigen Aufnahme eines einzigen jeweils zugehörigen Formeinsatzes und mehreren, damit integral ausgebildeten, in Umfangsrichtung verlaufenden, gegenseitig beabstandeten Gurtelementen sowie sich zwischen diesen erstreckenden, ebenfalls integral mit den Hüllenteil ausgebildeten Verbindungsstegen bestehen, wobei die Gurtelemente als in sich geschlossene Halteringe oder als Teilringe ausgebildet sind.

Wesentlich ist demgemäß für die Erfindung, daß unter Abkehr von der bisher bekannten, nur über aufwendige und zeitraubende Fräsvorgänge realisierbaren Vollformbauweise konturgebende Formeinsätze mit diese formschlüssig aufnehmenden und sie abstützend umschließenden Steggurtkörpern aus Gußmaterial kombiniert werden, wobei die Formeinsätze bevorzugt lediglich als eigenstabile, die Maßhaltigkeit bei der Bearbeitung, der Montage und der Demontage gewährleistende Körper ausgebildet sein müssen und die sie umschließenden Steggurtkörper praktisch die gesamten statischen und dynamischen Belastungen aufnehmen und durch die Ausbildung als Gußkörper einfach und belastungsspezifisch gestaltet und gefertigt werden können.

Im Falle von Großwerkzeugen läßt sich eine Verkürzung der Fertigungsdauer im Vergleich zur Vollformbauweise um mehrere Monate erzielen, und dabei ist von ganz wesentlicher Bedeutung, daß durch die Kombination der konturgebenden Formeinsätze mit den sie umschließenden Steggurtkörpern im Hinblick auf Funktionalität und Stabilität bei optimaler Ausnutzung des einzusetzenden Materials hinsichtlich der Gestaltungsmöglichkeiten große Freiheiten geschaffen werden.

Bevorzugt bestehen die gegossenen Steggurtkörper jeweils aus einem inneren Hüllenteil zur formschlüssigen Aufnahme des jeweils zugehörigen Formeinsatzes und mehreren damit integral ausgebildeten, in Umfangsrichtung verlaufenden, gegenseitig beabstandeten Gurtelementen sowie sich zwischen diesen erstreckenden, ebenfalls integral mit dem Hüllenteil ausgebildeten Verbindungsstegen.

Diese integral ausgebildeten Steggurtkörper lassen sich hinsichtlich der zu erwartenden statischen und dynamischen Belastungen durch Wahl der gegenseitigen Abstände und / oder der Querschnittsabmessungen der Gurtelemente und / oder der Verbindungsstege so gestalten, daß unter optimaler Ausnutzung des Materialeinsatzes eine so hohe Stabilität erzielt wird, daß trotz der im Vergleich zur Vollformbauweise beträchtlichen Gewichtsersparnis im Betrieb keine irgendwie störenden und zu Ermüdungserscheinungen führenden Bewegungen auftreten, was auch bedeutet, daß weniger Abnutzungseffekte, die durch Reibungsvorgänge unter hohem Druck entstehen könnten, auftreten.

Die aus Gußmaterial bestehenden Steggurtkörper besitzen aufgrund ihrer Struktur eine große Außenfläche und gewährleisten dadurch auch eine gute Wärmeableitung, die in Verbindung mit dem gewählten Gußmaterial, das vorzugsweise graphithaltig und damit schlecht wärmeleitend ist, dazu führt, daß trotz der beispielsweise etwa 70°C betragenden Temperatur im Formhohlraum die Außentemperatur der Vorrichtung etwa auf Raumtemperatur bleibt.

Durch die aufgrund der Verwendung von gegossenen Steggurtkör pern erzielbare Gewichtseinsparung müssen im Betrieb auch nur wesentlich geringere Massen bewegt werden, was nicht nur zu Energieeinsparungen, sondern auch dazu führt, daß die wirksamen Führungen geschont werden.

Durch die Trennung und damit auch die separate Fertigung von Steggurtkörpern und Formeinsätzen ist eine mit entsprechender Zeitersparnis verbundene parallele Fertigung dieser Komponenten möglich, wobei aufgrund der vorgenommenen Aufteilung auch die Zugänglichkeit der Komponenten für die jeweils erforderlichen Bearbeitungsvorgänge verbessert wird.

Möglich ist es auch, die Steggurtkörper praktisch als Standardeinheiten zur Aufnahme von formschlüssig passenden, unterschiedliche Formhohlräume festlegenden Formeinheiten auszubilden, was insbesondere dann in Betracht kommt, wenn die bei den verschiedenen Formeinheiten während des Spritzgießverfahrens auftretenden statischen und dynamischen Belastungen ähnlich sind und damit auch in jeweils optimaler Form von den Steggurtkörpern aufgenommen werden können.

Weitere wesentliche Vorteile der Erfindung resultieren daraus, daß beim Gießen der jeweiligen Steggurtkörper gleich eine Vielzahl von sich praktisch ohne Mehraufwand ergebenden Zusatzfunktionen erzielt werden kann. So ist es möglich, durch Freigießen von Durchbrüchen für sämtliche Versorgungsleitungen und Sichtfenster die bisher notwendigen aufwendigen Bearbeitungsvorgänge im Vollkörper zu vermeiden und beispielsweise durch Freigießen von Anlageflächen sicherzustellen, daß geringere Wärmeübertragungseffekte auftreten und auch ohne die Verwendung von Wärmedämmplatten keine störenden Wärmeübertragungen auf Maschine und Umgebung erfolgen, wobei sich in diesem Zusammenhang auch die durch die Steggurtkörpergestaltung geschaffene Kühlkörperstruktur vorteilhaft auswirkt.

Schließlich stellt es einen weiteren wesentlichen Vorteil dar, daß die Fertigung separater, mit der Vorrichtung zu verschraubender Funktionseinheiten praktisch vermieden werden kann, da Funktionselemente, Stützbolzen, Transportelemente, Führungslemente und dergleichen unmittelbar beim Gießvorgang der Steggurtkörper mit angegossen bzw. ausgeformt werden können und damit unmittelbar zur Verfügung stehen bzw. gegebenenfalls noch geringfügig bearbeitet werden müssen, wobei sich diese Bearbeitung auf eine wenig Aufwand verursachende Oberflächenbearbeitung beschränkt.

Weitere vorteilhafte Ausgestaltungen der Erfindung sind in den Unteransprüchen angegeben. Ein Ausführungsbeispiel der Erfindung wird nachfolgend unter Bezugnahme auf die Zeichnung erläutert; in der Zeichnung zeigt:
- Figur 1: eine schematische Teilschnittdarstellung einer gemäß der Erfindung ausgebildeten Vorrichtung zur Herstellung eines Kunststoff-Stoßfängers für ein Kraftfahrzeug,
- Figur 2: eine Schnittansicht der Vorrichtung nach Figur 1 in einer zur Schnittebene von Figur 1 rechtwinkligen Ebene, und
- Figur 3: eine perspektivische Vorderansicht des maschinenseitigen Steggurtkörpers einer gemäß der Erfindung ausgebildeten Vorrichtung.

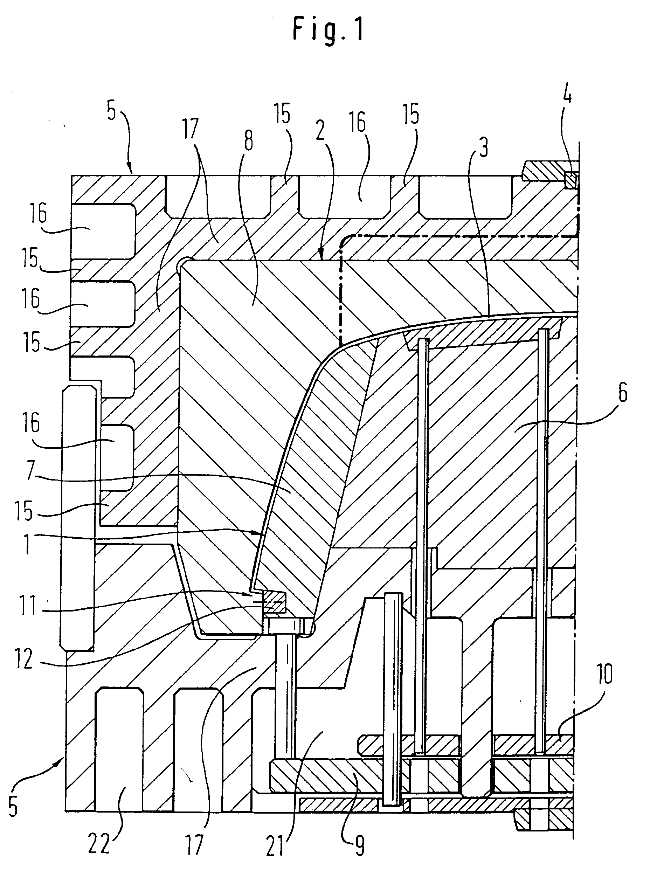

Die Teilschnittdarstellung nach Figur 1 zeigt eine Vorrichtung zum Herstellen von Kunststoff-Spritzgußformteilen im geschlossenen Zustand.

Die Vorrichtung umfaßt eine Patritzeneinheit 1 und eine Matritzeneinheit 2, die zwischen einer maschinenseitigen Aufspannfläche und einer Druck ausübenden Anordnung gegeneinander verspannbar sind und dabei zwischen sich einen dem jeweiligen Formteil entsprechenden Hohlraum 3 begrenzen. In diesen Hohlraum 3 kann das Spritzgußmaterial über wenigstens eine Düse 4 und eine oder mehrere Zuführleitungen unter hohem Druck eingebracht werden.

Die Patritzeneinheit 1 besteht aus einem Formeinsatz 8 und einem diesen umschließenden Steggurtkörper 5, und auch die Matritzeneinheit 2 wird von einem Formeinsatz 6, 7 und einem diesem zugeordneten Steggurtkörper 5 gebildet.

Der Formeinsatz der Patritzeneinheit ist in bekannter Weise und zur Gewährleistung der jeweils notwendigen Entformung mehrteilig ausgebildet und umfaßt insbesondere ein Innenteil 6 sowie ein Außenteil 7, die relativ zueinander bewegbar sind. Der konkrete Aufbau des mehrteiligen Patritzen-Formeinsatzes 6, 7 sowie die zur gegenseitigen Führung und Betätigung vorgesehenen Organe sind herkömmlicher Art und brauchen daher im Rahmen der Erfindung nicht im Detail erläutert zu werden, da die Erfindung bei unterschiedlichster Gestaltung der Formeinsätze verwendbar ist.

Zu erwähnen ist jedoch, daß die zur Realisierung der erforderlichen Relativbewegungen zwischen Patritzeneinheit 1 und Matritzeneinheit 2 sowie zur Bewegung von Formeinsatzteilen benötigten Einheiten, nämlich eine Hauptbetätigungsplatte 9 und eine Auswerfer-Betätigungsplatte 10 in einer entsprechend dimensionierten Ausnehmung 21 des unteren Steggurtkörpers unterbringbar sind, wobei wesentlich ist, daß diese Ausnehmung 21 nicht erst durch aufwendige und teure Fräsvorgänge geschaffen werden muß, sondern durch die entsprechende Gestaltung des Steggurtkörpers 5 beim Gießvorgang erhalten wird.

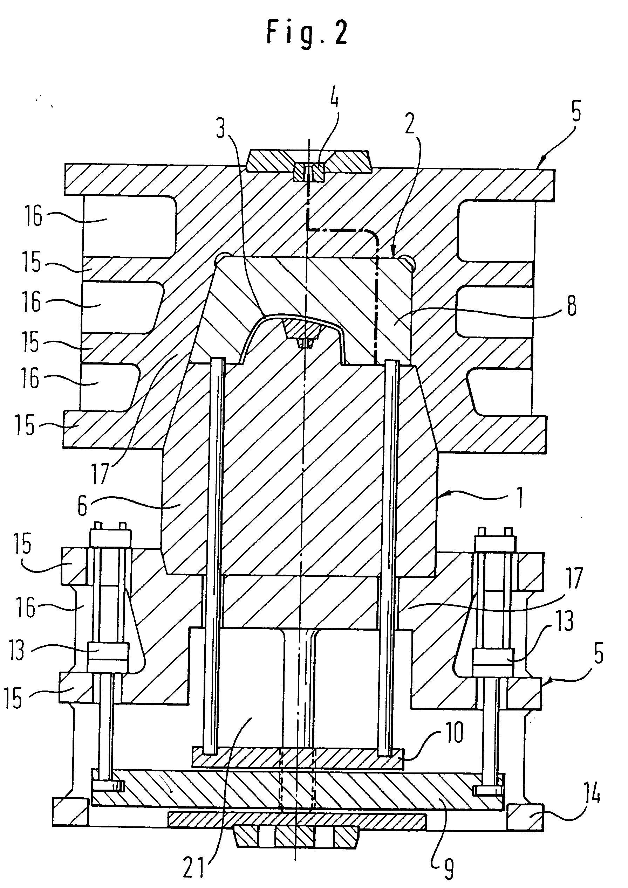

In der geschlossenen Stellung der Vorrichtung hintergreift ein Ansatz des zur Matritzeneinheit 2 gehörenden Formeinsatzes 8 den außenliegenden Teil 7 des zur Patritzeneinheit 1 gehörenden Formeinsatzes, wodurch eine entsprechende Verriegelung 11 geschaffen wird. Diese Verriegelung 11 wird nach dem erfolgten Spritzvorgang dadurch gelöst, daß mittels geeigneter Betätigungseinheiten 13, die in Figur 2 zu sehen sind, der außenliegende Teil 7 des Formeinsatzes der Patritzeneinheit relativ zum stillstehenden inneren Teil 6 angehoben und dabei aufgrund der Schrägflächenführung nach innen bewegt wird.

In Figur 1 ist noch ein Abstreiforgan 12 gezeigt, das während des Entformungsvorgangs wirksam wird, im einzelnen jedoch nicht beschrieben werden muß, da es für die vorliegende Erfindung keine besondere Bedeutung besitzt und auch durch eine entsprechende andere Einheit ersetzt werden könnte.

Der Formeinsatz 8 der Matritzeneinheit 2 und auch der Formeinsatz 6, 7 der Patritzeneinheit 1 wird jeweils getrennt von den Steggurtkörpern 5 durch entsprechende Fräsvorgänge gefertigt. Die Dimensionierung erfolgt derart, daß jeweils eine eigenstabile, die Maßhaltigkeit bei der Bearbeitung, der Montage und der Demontage gewährleistende Einheit vorliegt, die jedoch nicht dazu geeignet sein muß, für sich gesehen, die hohen dynamischen Kräfte aufzunehmen, die beim Spritzgußvorgang auftreten. Dazu ist der jeweilige Steggurtkörper 5 vorgesehen und bestimmt, in den der zugehörige Formeinsatz 8 bzw. 6, 7 formschlüssig eingepaßt ist.

Der vorzugsweise aus graphithaltigem Gußmaterial bestehende Steggurtkörper 5 wird jeweils gebildet von einem innenliegenden Hüllenteil 17, das zur Aufnahme des zugehörigen Formeinsatzes 6, 7 bzw. 8 dient, und mit diesem Hüllenteil 17 integral ausgebildeten Gurtelementen 15 und Verbindungsstegen 16.

Die Gurtelemente 15 erstrecken sich über den Umfang der Vorrichtung und bilden dabei in sich geschlossene Halteringe oder, wenn sie sich über den oberen Bereich des Steggurtkörpers 5 erstrecken, entsprechend wirksame Teilringe.

Die Wandungsstärke des jeweiligen Hüllenteils 17 sowie die Position, der gegenseitige Abstand und / oder die Querschnittsabmessungen der Gurtelemente 15 sowie der senkrecht zu den Gurtelementen 15 verlaufenden Verbindungsstege 16 werden in Abhängigkeit von den auftretenden statischen und dynamischen Belastungen gewählt, und die dabei möglichen Variationen lassen es zu, unter Minimierung des Materialeinsatzes und des Gewichtes äußerst stabile Strukturen zu schaffen.

Ferner ist es im Vergleich zu der bekannten Vollformbauweise nicht mehr notwendig, separate Stützorgane und eine separate Grund- oder Maschinenplatte vorzusehen, sondern es können alle diese Bestandteile in den jeweiligen Steggurtkörper 5 integriert werden, das heißt es liegt nur jeweils ein einheitlicher, einteiliger Steggurtkörper vor, dessen integrierte Verstrebungen in Form der Gurtelemente 15 und der Verbindungsstege 16 gezielte Festigkeitsvorgaben ermöglichen.

Zur weiteren Gewichts- und Materialersparnis können in mechanisch weniger belasteten Bereichen auch Aussparungen vorgesehen werden, wie sie in Figur 1 beispielsweise bei 22 gezeigt sind.

Die Schnittansicht nach Figur 2 läßt wiederum die formschlüssige Einpassung der Formeinsätze 6, 8 in die Steggurtkörper 5 erkennen und zeigt auch, daß diese Steggurtkörper aufgrund der Ausgestaltung der Gurtelemente 15 und der Verbindungsstege 16 eine große Oberfläche besitzen, so daß diese Steggurtkörper 5 auch eine Art Kühlkörperstruktur besitzen, die sich im praktischen Einsatz vorteilhaft auswirkt.

Die integral angeformte Maschinenplatte 14 ist zumindest in den Bereichen, wo sie mit der Maschinenaufspannplatte verspannt wird, oberflächenbearbeitet, so daß entsprechend geeignete Klemmflächen zur Verfügung stehen.

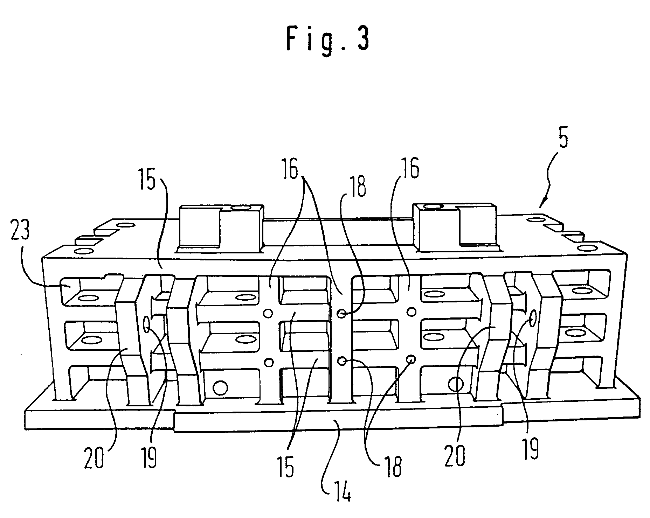

Die perspektivische Darstellung nach Figur 3 zeigt eine Ausführungsform eines unteren Steggurtkörpers 5, wobei die durch die Gurtelemente 15 und die Verbindungsstege 16 geschaffene Hohlprofil- oder Rahmenstruktur deutlich zu erkennen ist, die zur Aufnahme hoher Belastungen optimal geeignet ist.

Es wurde bereits erwähnt, daß in dem jeweiligen Steggurtkörper 5 Zusatzfunktionen auf einfache Weise realisiert werden können, wie beispielsweise die integrale Anformung von Transportelementen 20 mit entsprechenden Freigußöffnungen 19 zur Aufnahme von Kuppelorganen für Trägersysteme.

Ferner können in den Steggurtkörper 5 Hydraulik- und / oder Temperierbohrungen 18 eingebracht werden, wobei sich die Dichtheit des zur Schaffung des Steggurtkörpers 5 verwendeten Materials vorteilhaft auswirkt.

Die Maschinenplatte 14 ist ebenfalls integral angeformt und an bestimmten Bereichen zur Schaffung definierter ebener Aufnahme- oder Koppelflächen oberflächenbearbeitet.

In die in Umfangsrichtung verlaufenden Gurtelemente 15 können ebenfalls Freigüsse eingebracht werden, wie dies beispielsweise bei 23 in Form einer zylindrischen Ausnehmung zur Aufnahme von Säulenführungselementen gezeigt ist.

### Bezugszeichenliste

- 1: Patritzeneinheit
- 2: Matritzeneinheit
- 3: Hohlraum
- 4: Düse
- 5: Steggurtkörper
- 6: Innenteil Formeinsatz Patritze
- 7: Außenteil Formeinsatz Patritze
- 8: Formeinsatz Matritze
- 9: Hauptbetätigungsplatte
- 10: Auswerfer-Betätigungsplatte
- 11: Verriegelung
- 12: Abstreiforgan
- 13: Betätigungseinheit
- 14: Maschinenplatte
- 15: Gurtelement
- 16: Verbindungssteg
- 17: Hüllenteil
- 18: Bohrungen
- 19: Freigußöffnung
- 20: Transportelement
- 21: Ausnehmung
- 22: Freiraum
- 23: Freiguß

## Patentansprüche

1. Vorrichtung zum Herstellen von großflächigen Kunststoff-Formteilen, mit einer Patrizeneinheit (1) und einer Matrizeneinheit (2), die zwischen einer maschinenseitigen Aufspannfläche und einer Druck ausübenden Anordnung gegeneinander verspannbar sind und dabei zwischen sich einen dem jeweiligen Formteil entsprechenden Hohlraum (3) begrenzen, in den zumindest eine Hochdruckzuführung für das Spritzgußmaterial mündet, wobei sowohl die Patrizeneinheit (1) als auch die Matrizeneinheit (2) jeweils aus einem konturgebenden Formeinsatz (6, 7; 8) und einem den jeweiligen Formeinsatz formschlüssig aufnehmenden Körper aus Gußmaterial besteht,
bei der
der den jeweiligen Formeinsatz (6, 7; 8) aufnehmende Körper als den jeweiligen Formeinsatz (6, 7; 8) abstützend umschließender Steggurtkörper (5) ausgebildet ist, und
die gegossenen Steggurtkörper (5) jeweils aus einem inneren Hüllenteil (17) zur formschlüssigen Aufnahme eines einzigen jeweils zugehörigen Formeinsatzes (8; 6, 7) und mehreren, damit integral ausgebildeten, in Umfangsrichtung verlaufenden, gegenseitig beabstandeten Gurtelementen (15) sowie sich zwischen diesen erstreckenden, ebenfalls integral mit dem Hüllenteil (17) ausgebildeten Verbindungsstegen (16) bestehen, wobei die Gurtelemente (15) als in sich geschlossene Halteringe oder als Teilringe ausgebildet sind.

2. Vorrichtung nach Anspruch 1,
dadurch **gekennzeichnet,**
daß der gegenseitige Abstand und / oder die Querschnittsabmessungen der Gurtelemente (15) und / oder der Verbindungsstege (16) in Abhängigkeit von den auftretenden statischen und dynamischen Belastungen gewählt sind.

3. Vorrichtung nach einem der vorhergehenden Ansprüche,
dadurch **gekennzeichnet,**
daß die Formeinsätze (6, 7; 8) lediglich als eigenstabile, die Maßhaltigkeit bei der Bearbeitung, der Montage und der Demontage gewährleistende Körper ausgebildet sind, während die die Formeinsätze (6, 7; 8) formschlüssig aufnehmenden Steggurtkörper (5) derart gestaltet und dimensioniert sind, daß durch die im Betrieb auftretenden Belastungen der Bereich einer elastischen Verformung der Steggurtkörper (5) nicht erreicht wird.

4. Vorrichtung nach einem der vorhergehenden Ansprüche,
dadurch **gekennzeichnet,**
daß der maschinenseitige Steggurtkörper (5) zumindest mit der mit der Maschinenaufspannfläche zu kuppelnden Grund- und Maschinenplatte (14) integral ausgebildet ist.

5. Vorrichtung nach einem der vorhergehenden Ansprüche,
dadurch **gekennzeichnet,**
daß die Steggurtkörper (5) in den Ausnehmungen für die Formeinsätze (6, 7; 8) sowie an weiteren vorgebbaren Funktionsflächen zumindest bereichsweise plan bearbeitete Teilflächen aufweisen.

6. Vorrichtung nach einem der vorhergehenden Ansprüche,
dadurch **gekennzeichnet,**
daß an die Steggurtkörper (5) Funktionselemente, insbesondere maschinenseitig vorgesehene Stützbolzen, seitliche und insbesondere durch Vergrößerungen der Verbindungsstege (16) erhaltene Transportelemente, Formsicherungselemente, Spannflansche, Verteilerblöcke, Führungselemente und zur Aufnahme von Führungen vorgesehene Elemente integral angegossen sind.

7. Vorrichtung nach einem der vorhergehenden Ansprüche,
dadurch **gekennzeichnet,**
daß in den Steggurtkörpern (5) durch Freigießen Durchbrüche für Versorgungsleitungen, Sichtfenster und dergleichen ausgebildet sind.

8. Vorrichtung nach einem der vorhergehenden Ansprüche,
dadurch **gekennzeichnet,**
daß an den Steggurtkörpern (5) durch Freigießen vorstehende Plan-Anlageflächen ausgebildet sind.

9. Vorrichtung nach einem der vorhergehenden Ansprüche,
dadurch **gekennzeichnet,**
daß in die Steggurtkörper (5) Hydraulik- und / oder Temperierbohrungen (18) eingebracht sind.

10. Vorrichtung nach einem der vorhergehenden Ansprüche,
dadurch **gekennzeichnet,**
daß die Verbindungsstege (16) zumindest zwischen dem untersten Gurtelement (15) und der festspannbaren Maschinenplatte (14) nach außen hin erweitert sind.

11. Vorrichtung nach einem der vorhergehenden Ansprüche,
dadurch **gekennzeichnet,**
daß die Steggurtkörper (16) aus einem graphithaltigen Gußmaterial bestehen.

12. Vorrichtung nach einem der vorhergehenden Ansprüche,
dadurch **gekennzeichnet,**
daß Steggurtkörper (16) als Standardeinheiten zur Aufnahme von formschlüssig passenden, unterschiedliche Formhohlräume festlegenden Formeinheiten ausgebildet sind.

## Claims

1. Apparatus for manufacturing large area plastic mold parts, the apparatus comprising a die (1) and a counter-die (2) which can be clamped against one another between a machine side clamping surface and an arrangement which exerts a pressure and which thereby bound a hollow cavity (3) corresponding to the respective molded part into which at least one high pressure supply for the injection molding material opens, characterized in that both the die (1) and also the counter-die (2) each consist of a contour-growing mold insert (6, 7; 8) and a body (5) of cast material which accommodates the respective mold insert in form-fitted manner, wherein the body which accommodates the respective mold insert (6, 7; 8) is formed as a web-braced body (5) which supportingly surrounds the respective mold insert (6, 7; 8), and the cast web-braced body (5) in each case consists of an inner envelope part (17) for the form-fitted reception of the respectively associated mold insert (8; 6, 7) and of a plurality of mutually spaced apart belt elements (15) which extend in the peripheral direction and also of connecting webs (16) which extend between the belt elements and which are likewise integrally formed with the envelope part (17), with the belt elements (15) being formed as closed holding rings or as part rings.

2. Apparatus in accordance with claim 1,
characterized in that
the mutual spacing and/or the cross-sectional dimensions of the belt elements (15) and/or of the connection webs (16) are selected in dependence on the static and dynamic loadings which arise.

3. Apparatus in accordance with one of the preceding claims,
characterized in that
the mold inserts (6, 7; 8) are solely formed as self stable bodies which ensure the dimensional accuracy during machining, installation and dismantling; while the web-braced bodies (5) which accommodate the mold inserts (6, 7; 8) in form-fitted manner are so laid out and dimensioned that the loadings which arise in operation do not reach a range in which an elastic deformation of the web-braced body (5) arises.

4. Apparatus in accordance with one of the preceding claims,
characterized in that
the machine side web-braced body (5) is integrally formed with the base plate or machine plate (14) which is to be coupled to the machine clamping surface.

5. Apparatus in accordance with one of the preceding claims,
characterized in that
the web-braced body (5) has surfaces which are at least regionally machined flat in the mounts for the mold inserts (6, 7; 8) and also at further predeterminable functional surfaces.

6. Apparatus in accordance with one of the preceding claims,
characterized in that
functional elements, in particular support bolts provided at the machine side, lateral transport elements and in particular transport elements formed by enlargements of the connection webs, mold securing elements, clamping flanges, distribution blocks, guide elements and elements provided to receive guides are integrally cast onto the web-braced body (5).

7. Apparatus in accordance with one of the preceding claims,
characterized in that
apertures for supply lines, viewing windows and the like are formed in the web-braced bodies (5) by leaving them free during casting.

8. Apparatus in accordance with one of the preceding claims,
characterized in that
projecting flat contact surfaces are formed on the web-braced bodies (5) by free casting.

9. Apparatus in accordance with one of the preceding claims,
characterized in that
hydraulic bores and/or tempering bores (18) are introduced into the web-braced bodies (5).

10. Apparatus in accordance with one of the preceding claims,
characterized in that
the connection webs (16) are broadened towards the outside at the least between the lowermost belt element (15) and the fixedly clampable machine plate (14).

11. Apparatus in accordance with one of the preceding claims,
characterized in that
the web-braced bodies (16) consist of a graphite containing cast material.

12. Apparatus in accordance with one of the preceding claims,
characterized in that
web-braced bodies (16) are formed as standard units for accommodating mold units which fit form-wise and define different mold cavities.

## Revendications

1. Dispositif de fabrication de pièces moulées en matière plastique de grande surface, comprenant un module de poinçon (1) et un module de matrice (2) qui peuvent être serrés l'un contre l'autre entre une surface de montage côté machine et un ensemble exerçant une pression et ainsi délimitent entre eux une cavité (3) qui correspond à la pièce moulée particulière et dans laquelle débouche au moins une arrivée haute pression de la matière à mouler par injection, aussi bien le module de poinçon (1) que le module de matrice (2) consistant chacun en une pièce rapportée interne de moulage (6, 7 ; 8) déterminant le contour et en un corps en fonte de logement avec complémentarité de formes de la pièce rapportée interne particulière de moulage,
dans lequel
le corps logeant la pièce rapportée interne particulière de moulage (6, 7 ; 8) est conformé en corps enveloppant de ceinturage à nervures (5) qui soutient la pièce rapportée interne particulière de moulage (6, 7 ; 8) et
chacun des corps moulés de ceinturage à nervures (5) consiste en un élément interne d'enveloppement (17) destiné à loger avec complémentarité de formes une unique pièce rapportée interne correspondante de moulage (8 ; 6, 7), et en plusieurs éléments de ceinturage (15) monoblocs avec le précédent, orientés dans la direction de la circonférence, placés à distance les uns des autres ainsi qu'en nervures de liaison (16) disposées entre ceux-ci, également monoblocs avec l'élément d'enveloppement (17), les éléments de ceinturage (15) étant conformés en anneaux de retenue fermés sur eux-mêmes ou en anneaux partiels.

2. Dispositif selon la revendication 1,
caractérisé
en ce que la distance mutuelle et/ou les cotes en coupe transversale des éléments de ceinturage (15) et/ou les nervures de liaison (16) sont adoptées en fonction des charges statiques et dynamiques apparaissant.

3. Dispositif selon l'une des revendications précédentes,
caractérisé
en ce que les pièces rapportées internes de moulage (6, 7 ; 8) sont simplement conformées en corps ayant leur stabilité propre, garantissant le respect des cotes lors du façonnage, du montage et du démontage, tandis que les corps nervurés de ceinturage (5) logeant avec complémentarité de formes les pièces rapportées internes de moulage (6, 7 ; 8) sont conformés et dimensionnés de manière que les charges apparaissant en service n'atteignent pas la région d'une déformation élastique des corps nervurés de ceinturage (5).

4. Dispositif selon l'une des revendications précédentes,
caractérisé
en ce que le corps nervuré de ceinturage (5) côté machine est réalisé monobloc au moins avec la plaque d'assise et de machine (14) devant être assemblée avec la surface de montage de la machine.

5. Dispositif selon l'une des revendications précédentes,
caractérisé
en ce que les corps nervurés de ceinturage (5) comportent dans les évidements destinés aux pièces rapportées internes de moulage (6, 7 ; 8) ainsi que sur d'autres surfaces fonctionnelles pouvant être prescrites des éléments de surface usinés plans au moins par zones.

6. Dispositif selon l'une des revendications précédentes,
caractérisé
en ce que des éléments fonctionnels, en particulier des goujons de soutien prévus côté machine, des éléments latéraux de transport obtenus en particulier par des agrandissements des nervures de liaison (16), des éléments de consolidation du moule, des brides de fixation, des blocs distributeurs, des éléments de guidage et des éléments prévus pour loger des guides sont réalisés par coulée, monoblocs avec les corps nervurés de ceinturage (5).

7. Dispositif selon l'une des revendications précédentes,
caractérisé
en ce que des passages sont réalisés par coulée en chute libre dans les corps nervurés de ceinturage (5) pour des conduits d'alimentation, des voyants et analogues.

8. Dispositif selon l'une des revendications précédentes,
caractérisé
en ce que des surfaces d'appui planes en saillie sont réalisées par coulée en chute libre dans les corps nervurés de ceinturage (5).

9. Dispositif selon l'une des revendications précédentes,
caractérisé
en ce que des trous hydrauliques et/ou d'équilibrage de température (18) sont réalisés dans les corps nervurés de ceinturage (5).

10. Dispositif selon l'une des revendications précédentes,
caractérisé
en ce que les nervures de liaison (16) sont élargies vers l'extérieur au moins entre l'élément inférieur de ceinturage (15) et la plaque (14) de la machine qui peut être fixée.

11. Dispositif selon l'une des revendications précédentes,
caractérisé
en ce que les corps nervurés de ceinturage (16) sont en fonte graphitique.

12. Dispositif selon l'une des revendications précédentes,
caractérisé
en ce que les corps nervurés de ceinturage (16) sont conformés en modules normalisés de logement de modules de moulage s'ajustant par complémentarité de formes et délimitant des cavités différentes de moulage.
